# EUROPEAN PATENT APPLICATION

(11) **EP 2 157 579 A1**
(43) Date of publication of application: **24.02.2010**
(21) Application number: 09158193.4
(22) Date of filing: 17.04.2009
(51) Int. Cl.: G11B 20/00, G11B 23/00, G11B 23/40, G11B 23/28, G11B 7/24

(54) **Anti-piracy optical disc**

(30) Priority: 18.08.2008 TW 97131390
(71) Applicant: Yao, Li-ho, Taipei (TW)
(72) Inventor: Yao, Li-ho, Taipei (TW)
(74) Representative: Dossmann, Gérard

(57) **Abstract**

An anti-piracy optical disc has a parent disc (10) and a sub-disc (20). The parent disc (10) has a hole (101) and a first identification characteristic (11). The hole (101) is formed through a central region of the parent disc (10). The sub-disc (20) is removably and matchingly mounted in the hole (101) of the parent disc (10) and has a second identification characteristic (21). The second identification characteristic (21) corresponds to the first identification characteristic (11) of the parent disc (10) to form a complete pattern. The anti-piracy optical disc can only be played when checking that the first and the second identification characteristics match up.

## Description

The present invention relates to an anti-piracy optical disc, and more particularly to an anti-piracy optical disc that avoids unauthorized copying.

The advancement of technology leads optical discs to be the most popular storage medium, such as compact discs (CDs), digital versatile discs (DVDs) or the like. However, most of people are not familiar with intellectual property rights. Many commercial optical discs, especially those having great worth, are copied without authorization.

To effectively prevent unauthorized copying of optical discs, manufacturers research and develop hard to look for solutions, such as extended Resolution Compact Disc (XRCD) from Victor Company of Japan (JVC), Super Audio Compact Disc (SACD) from Sony Corporation and Royal Dutch Philips Electronics Ltd. and the like. Both XRCD and SACD use "control management" and "exclusive player" technologies to prevent unauthorized copying of optical discs. In recent years, many DVD providers protect their intellectual property rights by further using techniques of adding noise signals, adding region codes, Divx coding or the like.

Furthermore, the advancement of network technology has resulted in digital players, such as MP3, MP4 or the like, becoming commonly used. However, data on the optical discs are easily copied from the optical discs to the digital players. Therefore, how to protect the data on the optical discs is a critical problem.

To solve the problem, a watermark technology is invented. The watermark technology embeds watermark information into digital data. If the data are copied, the watermark information is also copied together. However, watermark technology can only trace the source of copied discs; it cannot effectively prevent unauthorized copying.

To overcome the shortcomings, the present invention provides an anti-piracy optical disc that prevents unauthorized copying to mitigate or obviate the aforementioned problems.

The main objective of the invention is to provide an anti-piracy optical disc that prevents unauthorized copying.

The anti-piracy optical disc in accordance with the present invention comprises a parent disc and a sub-disc. The parent disc has a hole and a first identification. The hole is formed through a center region of the parent disc. The sub-disc is removably and matchingly mounted in the hole of the parent disc and has a second identification characteristic. The second identification characteristic corresponds to the first identification characteristic of the parent disc. The anti-piracy optical disc can only be played when checking that the first and the second identification characteristics match up.

Other objectives, advantages and novel features of the invention will become more apparent from the following detailed description when taken in conjunction with the accompanying drawings.
In the drawings:
Fig. 1 is an exploded perspective view of a first embodiment of an anti-piracy optical disc in accordance with the present invention;
Fig. 2 is a top view of the anti-piracy optical disc in Fig. 1;
Fig. 3 is a top view of a second embodiment of an anti-piracy optical disc in accordance with the present invention;
Fig. 4 is a top exploded view of a third embodiment of an anti-piracy optical disc in accordance with the present invention;
Fig. 5 is a exploded perspective view of a fourth embodiment of an anti-piracy optical disc in accordance with the present invention; and
Fig. 6 is a perspective view of the anti-piracy optical disc in Fig. 5 and an optical disc drive.

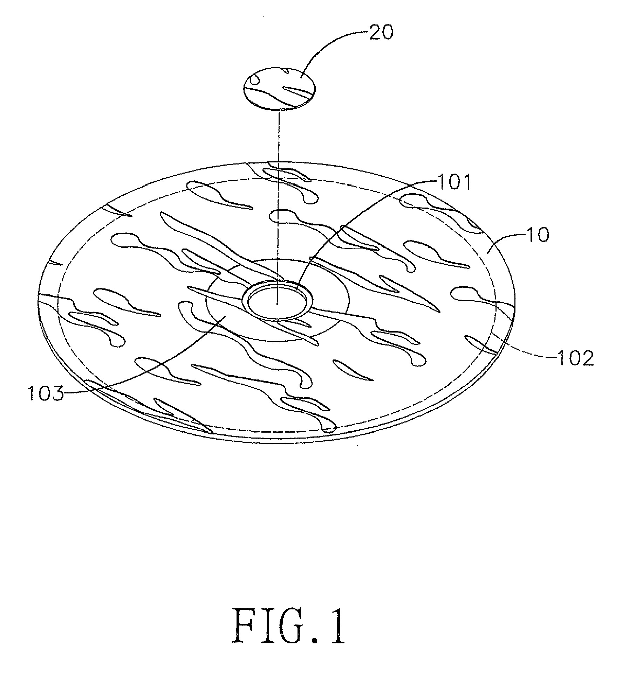

With reference to Fig. 1, an anti-piracy optical disc that prevents unauthorized copying in accordance with the present invention comprises a parent disc (10) and a sub-disc (20).

The parent disc (10) conforms to the optical disc standards to be a storage medium and has two opposite surfaces, a hole (101) and a first identification characteristic (11). Both surfaces of the parent disc (10) have a center. At least one surface of the parent disc (10) has a non-data segment (103) and a data segment (102). The data segment (102) surrounds the non-data segment (143). The hole (101) is formed through the centers of the two surfaces on the parent disc (10) and may be surrounded by the non-data segment (103). The first identification characteristic (11) is formed in the non-data segment (103) and may be on one of the surfaces or both.

The sub-disc (20) is removably and matchingly mounted in the hole (101) of the parent disc (10) and has two surfaces and a second identification characteristic (21). The sub-disc (20) can be independently manufactured or be integrally formed on and then divided from the parent disc (10). The second identification characteristic (21) of the sub-disc (20) may be formed on one of the two surfaces or both and corresponds to the first identification characteristic (11). Preferably, the second identification characteristic (21) of the sub-disc (20) may correspond specifically and be complement to the first identification characteristic (11) to form a recognizable continuous and complete pattern.

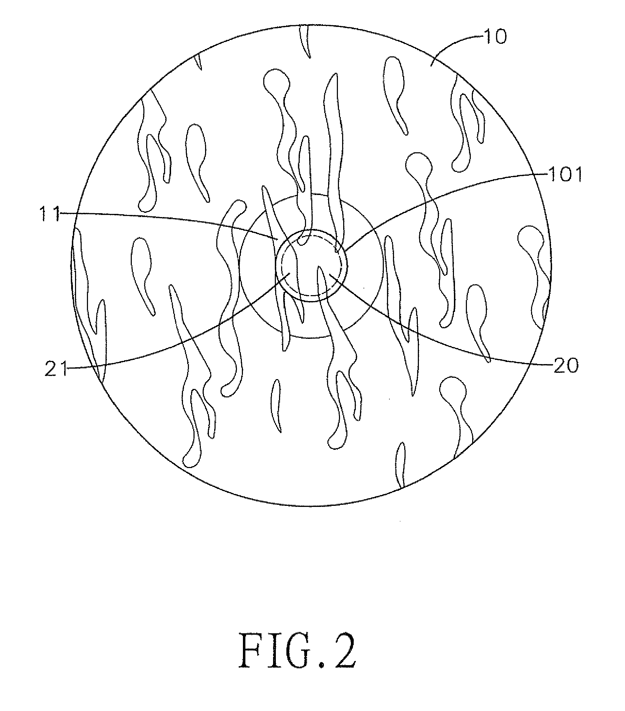

With further reference to Fig. 2, in a first embodiment of the anti-piracy optical disc in accordance with the present invention, the hole (101) of the parent disc (10) and the sub-disc (20) are circular. The first and the second identification characteristics (11, 21) are divided from a pattern that is formed continuously on the top surfaces of the parent disc (10) and the sub-disc (20). The pattern may be any kind of pattern, design, dot matrix or bar code matrix and may be printed with inks.

When the parent disc (10) with the sub-disc (20) is held by an optical disc drive capable of identifying whether the first and the second identification characteristics (11, 21) match up and is complement to each other, the optical disc drive checks whether the parent disc (10) is an original disc or an unauthorized copy by identifying whether the first and the second identification characteristics (11, 21) match up and is complement to each other. The technique of how to identify whether the first and the second identification characteristics (11, 21) match up may be pattern recognition technique, photo sense technique, edge-detection technique, level vector technique, level injection technique or the like.

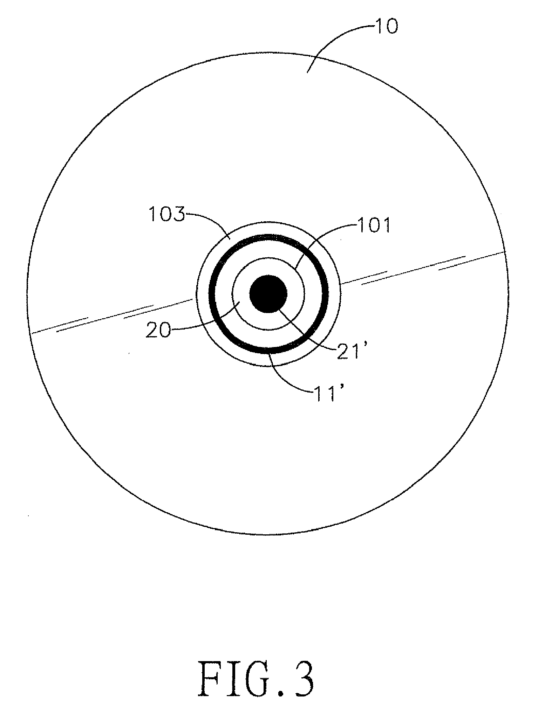

Additionally, with further reference to Fig. 3, in a second embodiment of the anti-piracy optical disc in accordance with the present invention, the first and the second identification characteristics (11', 21') are ink layers. The first identification characteristic (11') is printed on the non-data segment (103). The second identification characteristic (21') is printed on the sub-disc (20) and corresponds to the first identification characteristic (11'). Furthermore, the ink used to print the first and the second identification characteristics (11', 21') may be, but is not limited as follows.
1. ultraviolet (UV) inks: UV ink may be colored UV ink or colorless UV ink. The colored UV ink is composed of colored ink and UV compound. The colored UV ink is in a color under normal light and is in another color under UV light. The colorless UV ink is composed of colorless ink and UV compound. The colorless UV ink is invisible under normal light and is visible when it is exposed to UV light. Wavelength of the usable UV light must be in a range of 200 to 400 nanometer. For example, suitable wavelength of the UV light in the second embodiment may be 254 nanometers or 365 nanometers.
2. infrared inks: The infrared ink has element that is capable of absorbing infrared rays. The infrared ink does not react under normal light but reacts to show specific signs or marks under irradiation of infrared rays. Different wavelengths in a range of 700 to 1500 nanometers cause different reactions on the infrared inks.
3. optical inks: The optical ink has a dispersant that is capable of causing interference of lights. Patterns printed with the optical inks show different colors when emitted with light in different incident angles.
4. thermal inks: The thermal ink changes its color based on different ambient temperatures.
5. invisible inks: The invisible ink has invisible element, such as Isotag, Coircode or the like. The invisible element only shows up under light having specific wavelength.

In addition to the above-mentioned inks, other inks known by the person skilled in the art can also be used for the first and the second identification characteristics (11', 21'), such as chemical anti-counterfeit inks, magnetic anti-counterfeit inks or the like.

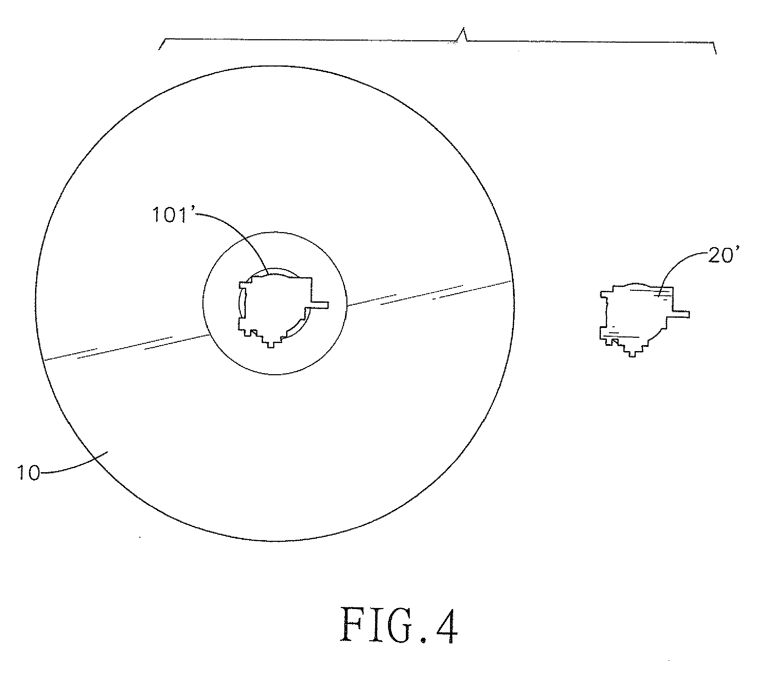

With further reference to Fig. 4, in a third embodiment of the anti-piracy optical disc in accordance with the present invention, the first and the second identification characteristics are based on shapes of the hole (101') and the sub-disc (20'). The hole (101') has an irregular shape, and the sub-disc (20') has the same shape of the hole (101') so the sub-disc (20') is allowed to be matchingly and removably mounted in the hole (101'). When the parent disc (10) with the sub-disc (20') is installed into a optical disc drive capable of verifying whether the shapes of the hole (101') and the sub-disc (20') match up, the optical disc drive will check whether the parent disc (10) is an original disc or an unauthorized copy by verifying whether the shapes of the hole (101') and the sub-disc (20') match up. The technique of how to verify whether the shapes of the hole (101') and the sub-disc (20') match up may be outline detection technique, array detection technique or the like.

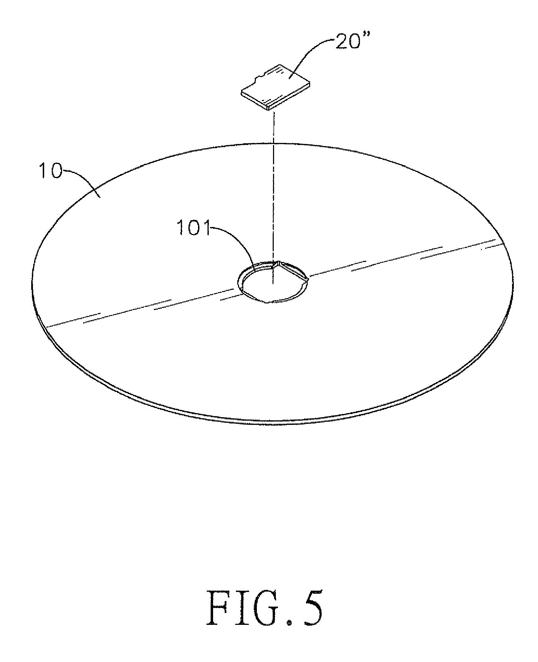

With further reference to Fig. 5, in a fourth embodiment of the anti-piracy optical disc in accordance with the present invention, the first and the second identification characteristics are the same as in the third embodiment of Fig. 4. A difference between the fourth embodiment and the third embodiment of the present invention is that the sub-disc (20") is an electronic device, such as a micro memory card, application-specific integrated circuit (ASIC) or the like.

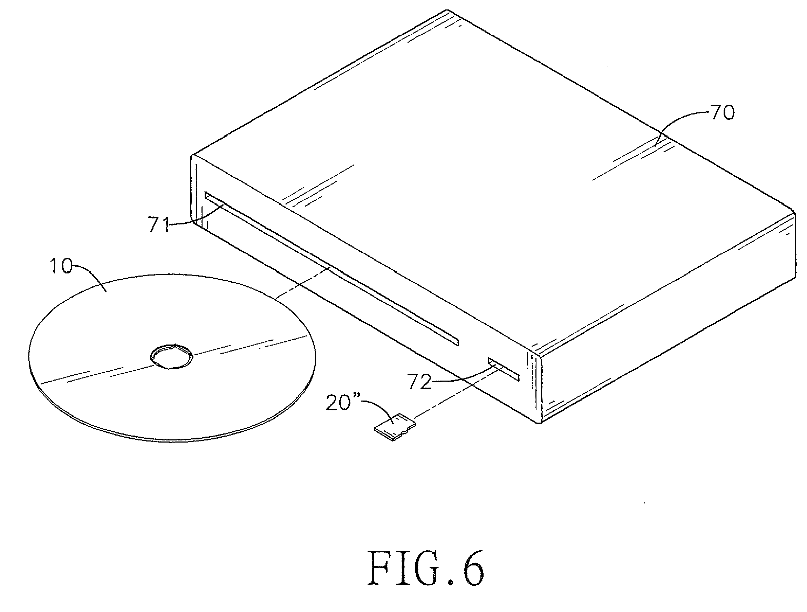

With further reference to Fig. 6, a way to recognize whether the optical disc in the third or the fourth embodiments of the present invention is an original disc or an unauthorized copy is to use an optical disc drive (70) having a disc carrier (71) and a card reader (72). The optical disc drive (70) is capable of verifying whether the first and the second identification characteristics match up. When installing the parent disc (10) and the sub-disc (20") respectively in the disc carrier (71) and the card reader (72), the optical disc drive (70) will check whether the parent disc (10) is original or pirated by verifying whether the first and the second identification characteristics match up.

With such an anti-piracy optical disc, before the optical disc drive (70) playing the parent disc (10), the optical disc drive (70) checks the validity of the parent disc (10) by verifying whether the first and the second identification characteristics respectively on the parent disc (10) and the sub-disc (20, 20', 20") match up. An unauthorized copy of the parent disc (10) of the present invention will be recognized and rejected by the optical disc drive (70) because the pirated optical disc does not have a corresponding sub-disc (20, 20', 20") and the first and the second identification characteristics. Therefore, unauthorized copy will be effectively stopped.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the principles of the invention to the full extent indicated by the broad general meaning of the terms in which the appended claims are expressed.

## Claims

1. An anti-piracy optical disc comprising:
a parent disc (10) having
a center;
a hole (101) formed through the center; and
a first identification characteristic (11)(11'); and
a sub-disc (20) being removably and matchingly mounted in the hole (101) of the parent disc (10) and having
a second identification characteristic (21)(21') corresponding to the first identification characteristic (11) of the parent disc (10).

2. The optical disc as claimed in claim 1, wherein the first and the second identification characteristics (11)(11')(21)(21') are complement to each other to form a complete pattern.

3. The optical disc as claimed in claim 2, wherein the pattern is printed with inks.

4. The optical disc as claimed in claim 1, wherein:
the hole (101') has an irregular shape, and the shape of the hole (101') is the first identification characteristic (11'); and
the sub-disc (20') has the same shape as the hole (101') to be the second identification characteristic (21').

5. The optical disc as claimed in claim 4, wherein whether the first and the second identification characteristics (11')(21') match up is determined by edge-detection technique.

6. The optical disc as claimed in claim 1, wherein:
the parent disc (10) further has
a non-data segment (103) surrounding the hole (101) and having an ink layer as the first identification characteristic (11) formed on the non-data segment (103); and
the sub-disc (20) further has another ink layer as the second identification characteristic (21) formed on the sub-disc (20).

7. The optical disc as claimed in claim 6, wherein the ink layers are composed of ultraviolet inks, infrared inks, optical inks, thermal inks or invisible inks.

8. The optical disc as claimed in claim 1, wherein the sub-disc (20") is an electronic device.

9. The optical disc as claimed in claim 8, wherein the electronic device is a micro memory card.

10. The optical disc as claimed in any one of claims 1, 2, 4, 6 or 8, wherein the parent disc (10) and the sub-disc (20) are independently manufactured.

11. The optical disc as claimed in any one of claims 1, 2, 4, 6, or 8 wherein the sub-disc (20) is integrally formed on and is divided from the parent disc (10).
